# EUROPEAN PATENT SPECIFICATION

(11) **EP 3 320 254 B1**
(45) Date of publication and mention of the grant of the patent: **24.04.2019**
(21) Application number: 15747610.2
(22) Date of filing: 06.07.2015
(51) Int. Cl.: F16M 11/34, F16M 11/16, E02D 29/12

(54) **FAST ADJUSTING AND LOCKING SYSTEM FOR DIFFERENT LEG OPENING ANGLES IN A 3POD SYSTEM**
SCHNELLANPASSUNGS- UND -ARRETIERUNGSSYSTEM FÜR VERSCHIEDENE BEINÖFFNUNGSWINKEL IN EINEM 3POD-SYSTEM
SYSTÈME DE RÉGLAGE ET DE BLOCAGE RAPIDE POUR DIFFÉRENTS ANGLES D'OUVERTURE DE PIED DANS UN SYSTÈME DE TRÉPIED

(43) Date of publication of application: 16.05.2018
(73) Proprietor: Honeywell International Inc., Morristown, New Jersey 07962-2245 (US)
(72) Inventor: EMICH, Frank, Morristown, New Jersey 07962-2245 (US); HROUZEK, Jan, Morristown, New Jersey 07962-2245 (US)
(74) Representative: Houghton, Mark Phillip
(86) International application number: PCT/US2015/039186
(87) International publication number: WO 2017/007445

(56) References cited:
- WO-A1-98/19099
- WO-A1-2010/130282
- CN-U- 204 189 441
- JP-A- 2007 328 075
- US-A- 2 534 659
- US-A- 4 660 679
- US-A1- 2010 038 498

## Description

### FIELD

This disclosure relates to anchorage systems for raising and lowering a worker to and from a work site, and more particularly, to tripod devices that provide an anchor for raising and lowering a worker into and out of a manhole.

### BACKGROUND

Tripod devices that create an anchor for raising and lowering a worker into a manhole are known. Conventionally, such tripods devices are designed for one maximum manhole size, with the three legs of tripod either being folded for transportation or extended to accommodate this one maximum manhole size with no variable position in-between. Accordingly, to adjust to other opening angles or sizes of manholes, such tripods have to adjust a webbing or chain connecting the feet of each of the legs to reduce the opening angle and therefore the diameter inscribed by the position of the three tripod legs. Because there is a possibility of encountering different sizes of manholes, there is a need for improvement.

WO98/19099, US4660679 and US2534659 each disclose various designs of tripod and a quadrapod with various adjusting means.

### SUMMARY

The present invention, in its various aspects, is as set out in the appended claims. In accordance with one feature of this disclosure, a fast adjusting tripod system is provided for supporting the weight of a worker during entry to and exit from a worksite beneath the tripod system. The tripod system includes a central frame; three support legs extending from the frame, with each of the legs being pivot mounted to the frame; a linkage mechanism operably connecting the three support legs to pivot together relative to the frame; an anchor component supported by the frame and the legs and configured to anchor a worker during entry and exit from a worksite beneath the tripod system; and a stop extending between the frame and the linkage mechanism. The stop is configured to selectively lock the linkage mechanism against movement relative to the frame at a plurality of distinct, predetermined pivot angle positions of the legs relative to the frame. Each of the predetermined pivot angle positions correspond to one of a plurality of stop surfaces on at least one of the linkage mechanism and the frame, with each of stop surfaces being engaged by the stop with the legs at a corresponding one of the predetermined pivot angle positions.

As one feature, the anchor component is mounted on the frame and extends downwardly from the frame with the tripod system positioned above a worksite.

In one feature, the stop surfaces are located on the linkage mechanism and the stop is mounted to translate relative to the frame between a free position where the stop is not engaged with any of the stop surfaces and a locked position where the stop is engaged with one of the stop surfaces.

According to the invention, the linkage mechanism includes a slide mounted to translate relative to the frame and three links, with each link pivot mounted to a corresponding one of the legs and to the slide.

As one feature, the frame comprises an elongate guide mounting the slide for translation relative to the frame.

In one feature, the elongate guide is a cylindrical rod and the slide has an elongate bore that receives the cylindrical rod for sliding, translational movement along an axis.

According to one feature, each of the links is pivot mounted to the corresponding leg at a location on the leg above where the corresponding leg is pivot mounted to the frame, with the tripod system positioned above a worksite.

According to the invention, the stop surfaces are located on the slide.

In one feature, at least one of the stop surfaces is defined by a bore hole in the slide.

According to one feature, at least one of the stop surfaces is defined by an end surface of the slide.

As one feature, the slide has opposite end surfaces, one of the stop surfaces is defined by one of the end surfaces, another one of the stop surfaces is defined by the other end surface, and at least one more of the stop surfaces is defined by a bore hole in the slide.

In one feature, the stop comprises a pin mounted in the frame to translate relative to the frame between a free position where the stop is not engaged with any of the stop surfaces and a locked position where the stop is engaged with one of the stop surfaces.

According to one feature, the pin is a cylindrical pin that is spring biased toward the locked position.

As one feature, the slide is mounted to translate along a first axis and the pin is mounted to translate perpendicular to the first axis.

In one feature, the stop further comprises a knob configured for hand actuation of the stop by a user.

It should be understood that each of the features described above can be combined with any, or all of the other features described above.

Other features and advantages will become apparent from a review of the entire specification, including the appended claims and drawings.

### BRIEF DESCRIPTION OF THE DRAWINGS

Fig. 1 is a view showing the upper portion of a tripod system according to this disclosure, with the lower portions of the three legs of the tripod not being shown;
Fig. 2 is a section view taken from line 2-2 in Fig. 1;
Fig. 3A is view of the tripod system of Figs. 1 and 2, with the legs opened at a first predetermined position/pivot angle and with portions of a central frame removed for purposes of illustration;
Fig. 3B is a view similar to Fig. 2, but showing the system with the legs at the first predetermined position/pivot angle;
Figs. 4A and 4B are views similar to Figs. 3A and 3B, respectively, but showing the tripod system at a second predetermined position/pivot angle that is larger than the first predetermined position/pivot angle; and
Figs. 5A and 5B are views similar to Figs. 3A, 4A and 3B, 4B, respectively, but shown the system with the legs at a third, predetermined position/pivot angle that is larger than the first and second predetermined positions/pivot angles.

### DETAILED DESCRIPTION

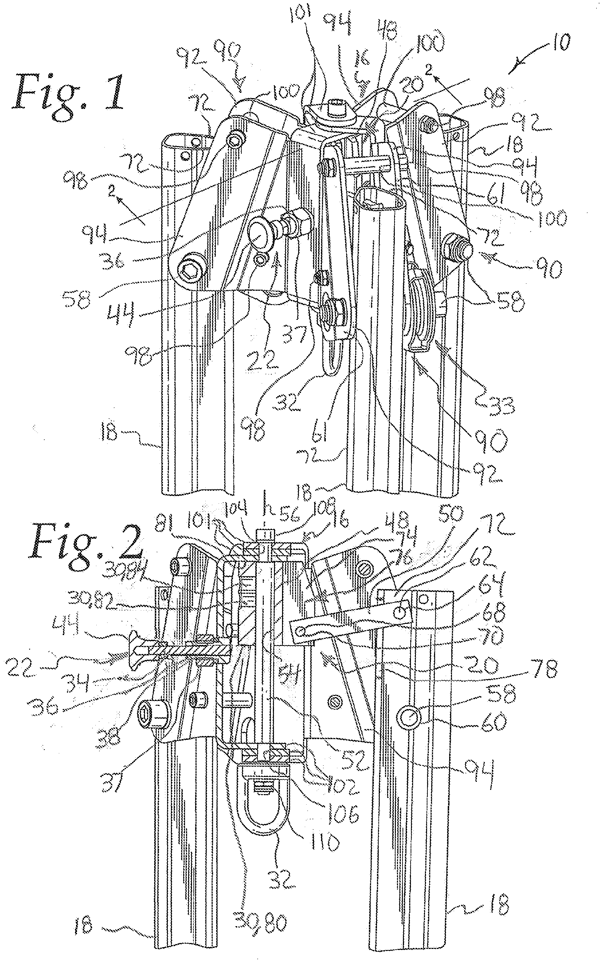

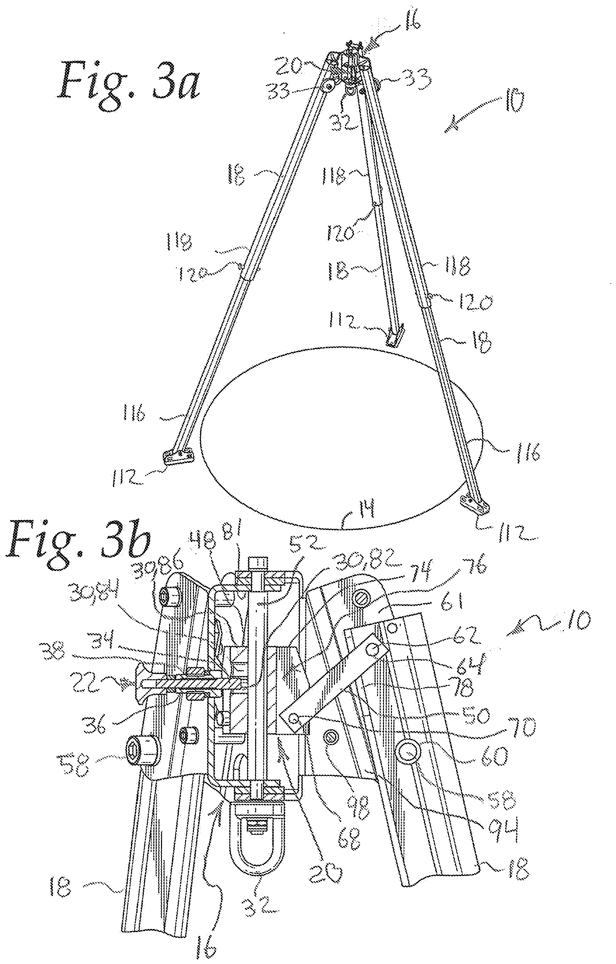

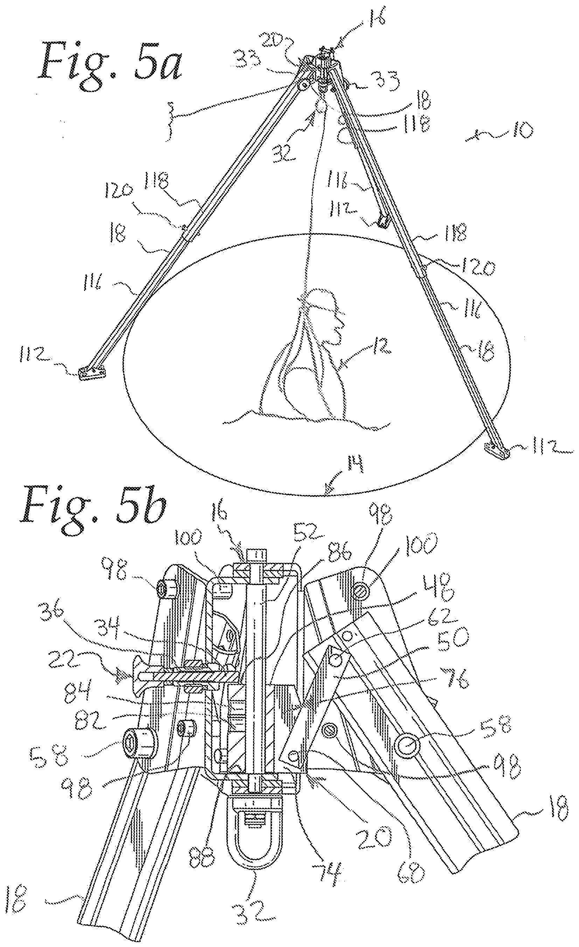

With reference to Figs. 1-5B, an embodiment of a fast adjusting tripod system 10 according to this disclosure is shown for supporting the weight of a worker (shown schematically at 12 in Fig. 5A) during entry to and exit from a work site which will typically be defined by a manhole 14 located beneath the tripod system 10. As illustrated in Figs. 3A-5B, the tripod system 10 allows for quickly adjusting to different diameter sizes of manholes 14.

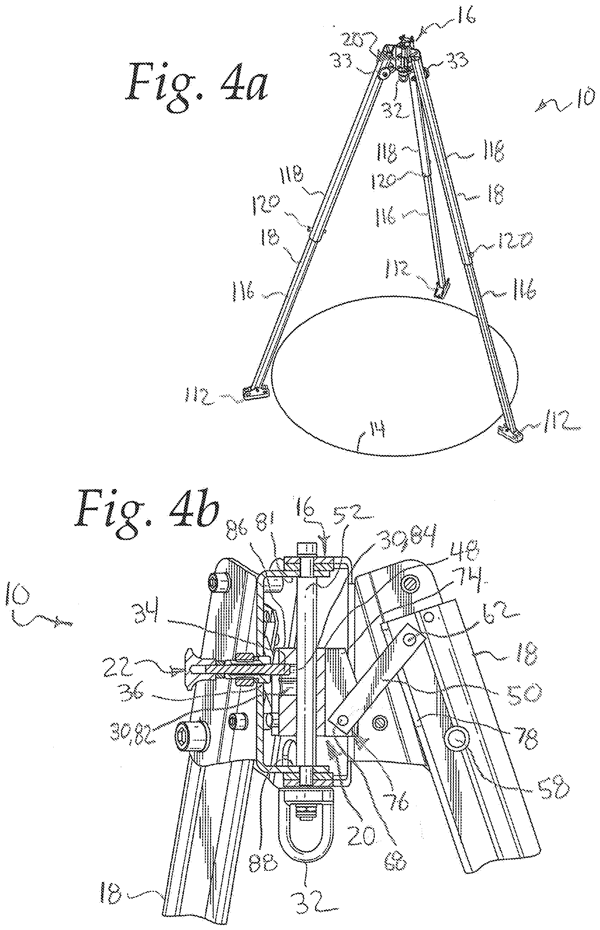

The tripod system 10 includes a central frame 16; three support legs 18 extending downwardly from the frame 16, with each of the legs 18 being pivot mounted to the frame; and a linkage mechanism, shown generally at 20. The linkage mechanism connects the three support legs 18 to pivot together relative to the frame, as best seen in Figs. 2, 3A, 4A and 5A, which show the legs in a stowed position in Fig. 2, in a minimum pivot angle position in Fig. 3A, in an intermediate pivot angle position in Fig. 4A, and in a maximum pivot angle position in Fig. 5A. The tripod system 10 further includes a stop, shown generally at 22, extending between the frame 16 and the linkage mechanism 20 and configured to selectively lock the linkage mechanism 20 against movement relative to the frame 16 at each of the distinct, predetermined pivot angle positions of the legs 18 relative to the frame 16 discussed above and again as illustrated by each of the positions shown in Figs. 2, 3A-3B, 4A-4B and 5A-5B, respectively. Each of the predetermined pivot angle positions corresponds to one of a plurality of stop surfaces 30. Each of the stop surfaces 30 can be selectively engaged by the stop 22 with the legs 18 at a corresponding one of the predetermined pivot angle positions. It should be appreciated that while the stop 22 is shown as being mounted by the frame 16 and the stop surfaces 30 as being on a component of the linkage mechanism 22, other configurations are possible, including configurations wherein the stop 22 is mounted in a component of the linkage mechanism 20 and the stop surfaces are located on the frame 16.

The tripod system 10 further includes an anchor component, shown in the illustrated embodiment at 32, that is supported by the frame 16 and the legs 18 and is configured to anchor a worker 12 during entry and exit from the work site 14 beneath the tripod system 10. In the illustrated embodiment, the anchor component 32 is mounted on the frame 16 and extends downwardly from the frame 16 with the tripod system 10 positioned above the work site 14. It should be appreciated that while the anchor component 32 is shown mounted on the frame 16 in the illustrated embodiment, other configurations are possible, including mounting the anchor component 32 on one or more of the legs 18 or additional anchor components that are mounted on the frame 16 and/or the one or more of the legs 18, with the anchor components 32 possibly including a winch or other appropriate anchor component, such as the pulley 33 shown mounted to the leg 18 in Fig. 1.

In the illustrated embodiment, the stop 22 is mounted on the frame 16 to translate between a free position (illustrated in Fig. 2) where the stop 22 is not engaged with any of the stop surfaces 30 and a locked position (shown in Figs. 3B, 4B and 5B) where the stop 22 is selectively engaged with the stop surfaces 30. In this regard, the stop 22 includes a hardened pin 34, which in the illustrated embodiment is a cylindrical pin 34 that is slidably mounted in a bushing 36 fixed to the frame 16. In this regard, the bushing 36 is fixed to the frame 16 via a threaded fastener 37 that engages external threads on the bushing 36 to clamp a portion of the frame 16 between the bushing 36 and the threaded fastener 37, which is shown in the form of a threaded lock nut 37. A helical spring 38 biases the stop 22, including the pin 34, to the locked position via engagement with a shoulder on the pin 36 and an internal shoulder on the bushing 36. The stop 22 further includes a hand actuable knob 44 that is engageable by a user's hand to actuate the stop 22 between the locked position and the free position.

In the illustrated embodiment, the linkage mechanism 20 includes a slide 48 mounted to translate relative to the frame 16, and three links 50, with each link 50 pivot mounted to a corresponding one of the legs 18 and to the slide 48. In this regard, it should be understood that while Figs. 2, 3B, 4B and 5B only show the relationship between one of the links 50, the corresponding leg 18 and the slide 48, the relationship between each of the other links 50, their corresponding leg 18 and the slide 48 is identical to that shown in Figs. 2, 3B, 4B and 5B. The frame 16 includes an elongate guide 52, which in the illustrated embodiment is a cylindrical rod 52 that is received in an elongate, cylindrical bore 54 of the slide 48 to guide the slide 48 in translation along a vertical axis 56. In the illustrated embodiment, each of the links 50 is pivot mounted to the corresponding leg 18 at a location on the leg 18 above where the leg 18 is pivot mounted to the frame 16. In this regard, each of the legs 18 is pivot mounted to the frame 16 via a shoulder bolt 58 that is received in a bushing 60 fixed in the leg 18, with the shoulder bolt 58 extending through a pair of frame flange walls 61 located on opposite sides of the leg 18. Each of the links 50 is pivot mounted to the corresponding leg 18 via a journal pin 62 received in a bore 64 at one end of the link 18, and pivot mounted to the slide 48 via a journal pin 68 fixed in the slide 48 and extending through a bore 70 at an opposite end of the link 50. In this regard, it should be appreciated that each of the pins 62 is supported by opposite side walls 72 of the corresponding leg 18, and each of the pins 68 is supported by opposite side walls 74 that define a channel 76 in the slide 48 that corresponds to the link 50 and the associated pin 68. In this regard, it should be understood that while only one of the opposite side walls 74 of the channel 76 is shown in Fig. 2 for purposes of illustration, the opposite side wall 74 is identical for each of the channels 76 in the slide 48 of the illustrated embodiment. Each of the links 50 extends through an elongate slot 78 formed in the corresponding leg 18 and is received in the corresponding channel 76 formed in the slide 48.

As best seen in Fig. 2, the slide 48 includes a lower end surface 80 that defines the stop surface 30 corresponding to the stowed position, with the slide 48 trapped between the stop 22 and an inner surface 81 of the frame 16. As best seen in Fig. 3A, the slide 48 includes a bore hole 82 that defines the stop surface 30 corresponding to the minimum pivot angle position, with the slide 48 locked against movement relative to the frame 16 by engagement of the pin 34 against the surface 30 of the bore hole 82. As best seen in Fig. 4B, the slide 48 includes a bore hole 84 that defines the stop surface 30 corresponding to the intermediate pivot angle position, with the slide 48 locked against movement relative to the frame 16 by engagement of the pin 34 against the surface 30 of the bore hole 84. As best seen in Fig. 5A, the slide 48 includes an upper end surface 86 that defines the stop surface 30 corresponding to the max pivot angle position, with the slide 48 being trapped between the stop 22 and an inner surface 88 of the frame 16.

As best seen in Fig. 1, the frame 16 in the illustrated embodiment is formed from three pairs 90 of frame members 92 and 94, with each pair 90 defining a channel 96 that receives a corresponding one of the legs 18. Each of the pairs 90 is joined by threaded fasteners 98 that extend through cylindrical spacers 100. Each of the members 94 includes a radially inwardly directed pair of upper and lower flanges 100 and 102 that have openings 104 and 106, respectively, through which the rod 52 extends, with the rod 52 and frame members 92 and 94 all being clamped together by threaded fasteners 108 and 110 connected to opposite ends of the rod 52.

As best seen in Figs. 3A, 4A and 5A, in the illustrated embodiment, a foot 112 is pivot mounted at the lower end 14 of each leg 18, and each of the legs 18 can be a telescoping construction wherein a lower portion 116 of the leg 18 telescopes within an upper portion 118 of the leg 18 and can be locked in its extended position via a suitable pin 120.

It should be appreciated that while one embodiment of the tripod system 10 is shown in the figures, other alternate embodiments are contemplated within the scope of this disclosure. For example, while the illustrated embodiment is shown with a stowed position, a min pivot angle position, an intermediate pivot angle position and a max pivot angle position, it may be desirable in some applications for the tripod system 10 to include more pivot angle positions or fewer pivot angle positions than in the illustrated embodiment. By way of further example, while the slide 48 is shown as being guided by the rod 52, in some embodiments it may be desirable for the slide 48 to be guided via other structure in the frame 16. As yet a further example, while a particular configuration has been shown for the linkage mechanism 20, it may be desirable in some applications for other configurations of the linkage mechanism 20 to be provided that operably connect the legs 18 so that they pivot together relative to the frame 16. Accordingly, it should be understood that the scope of the disclosure is not limited to the specific embodiment shown.

## Claims

1. A fast adjusting tripod system (10) for supporting the weight of a worker (12) during entry to and exit from a worksite (14) beneath the tripod system (10), the tripod system (10) comprising:
a central frame (16);
three support legs (18) extending from the frame (16), each of the legs (18) being pivot mounted to the frame (16);
a linkage mechanism (20) operably connecting the three support legs (18) to pivot together relative to the frame (16);
an anchor component (32) supported by the frame (16) and the legs (18) and configured to anchor a worker during entry and exit from a worksite (14) beneath the tripod system (10);
a stop (22) extending between the frame (16) and the linkage mechanism (20), the stop (22) configured to selectively lock the linkage mechanism (20) against movement relative to the frame (16) at a plurality of distinct, predetermined pivot angle positions of the legs (18) relative to the frame (16), each of the predetermined pivot angle positions corresponding to one of a plurality of stop surfaces (30) on at least one of the linkage mechanism (20) and the frame (16), each of the stop surfaces (30) being engaged by the stop (22) with the legs (18) at a corresponding one of the predetermined pivot angle positions, **characterized in that**
the linkage mechanism (20) comprises:
a slide (48) mounted to translate relative to the frame (16); and
three links (50), each link (50) pivot mounted to a corresponding one of the legs (18) and to the slide (48), and
the stop surfaces (30) are located on the slide (48).

2. The tripod system (10) of claim 1 wherein the anchor component (32) is mounted on the frame (16) and extends downwardly from the frame (16) with the tripod system (10) positioned above a worksite (14).

3. The tripod system (10) of any preceding claim wherein the stop surfaces (30) are located on the linkage mechanism (20) and the stop (22) is mounted to translate relative to the frame (16) between a free position where the stop (22) is not engaged with any of the stop surfaces (30) and a locked position where the stop (22) is engaged with one of the stop surfaces (30).

4. The tripod system (10) of any preceding claim wherein the frame (16) comprises an elongate guide (52) mounting the slide (48) for translation relative to the frame (16).

5. The tripod system (10) of claim 4 wherein the elongate guide (52) is a cylindrical rod (52) and the slide (48) has an elongate bore (54) that receives the cylindrical rod (52) for sliding, translational movement along an axis (56).

6. The tripod system (10) of any of claims 1, 4 or 5 wherein each of the links (50) is pivot mounted to the corresponding leg (18) at a location on the leg (18) above where the corresponding leg (18) is pivot mounted to the frame (16), with the tripod system (10) positioned above a worksite (14).

7. The tripod system (10) of claim 1 wherein at least one of the stop surfaces (30) is defined by a bore hole (82,84) in the slide (48).

8. The tripod system (10) of claim 1 wherein at least one of the stop surfaces (30) is defined by an end surface (80,86) of the slide (48).

9. The tripod system (10) of claim 1 wherein the slide (48) has opposite end surfaces (80,86), one of the stop surfaces (30) is defined by one of the end surfaces (80,86), another one of the stop surfaces (30) is defined by the other end surface (80,86), and at least one more of the stop surfaces (30) is defined by a bore hole in the slide (48).

10. The tripod system (10) of any of claims 1, or 5-9 wherein the stop (22) comprises a pin (34) mounted in the frame (16) to translate relative to the frame (16) between a free position where the stop (22) is not engaged with any of the stop surfaces (30) and a locked position where the stop (22) is engaged with one of the stop surfaces (30).

11. The tripod system (10) of claim 10 wherein the pin (34) is a cylindrical pin (34) that is spring biased toward the locked position.

12. The tripod system (10) of either claim 10 or claim 11 wherein the slide (48) is mounted to translate along a first axis (56) and the pin (34) is mounted to translate perpendicular to the first axis (56).

13. The tripod system (10) of any of claims 10-12 wherein the stop (22) further comprises a knob (44) configured for hand actuation of the stop (22) by a user.

## Patentansprüche

1. Schnell verstellendes Stativsystem (10) zum Halten des Gewichts eines Arbeiters (12) beim Betreten und Verlassen eines Arbeitsplatzes (14) unter dem Stativsystem (10), wobei das Stativsystem (10) Folgendes umfasst:
einen zentralen Rahmen (16),
drei Stützbeine (18), die sich von dem Rahmen (16) erstrecken, wobei die Beine (18) jeweils drehbar an dem Rahmen (16) gelagert sind,
einen Gestängemechanismus (20), der die drei Stützbeine (18) so wirkverbindet, dass sie sich zusammen relativ zu dem Rahmen (16) drehen,
eine Befestigungskomponente (32), die von dem Rahmen (16) und den Beinen (18) gehalten und dazu ausgelegt ist, einen Arbeiter beim Betreten und Verlassen eines Arbeitsplatzes (14) unter dem Stativsystem (10) zu befestigen,
eine Arretierung (22), die sich zwischen dem Rahmen (16) und dem Gestängemechanismus (20) erstreckt, wobei die Arretierung (22) dazu ausgelegt ist, den Gestängemechanismus (20) gegen eine Bewegung relativ zu dem Rahmen (16) an einer Vielzahl von eindeutigen, vorgegebenen Drehwinkelpositionen der Beine (18) relativ zu dem Rahmen (16) gezielt zu verriegeln, wobei die vorgegebenen Drehwinkelpositionen jeweils einer aus einer Vielzahl von Arretierungsflächen (30) auf dem Gestängemechanismus (20) und/oder dem Rahmen (16) entsprechen, wobei die Arretierungsflächen (30) jeweils von der Arretierung (22) in Eingriff genommen sind, während sich die Beine (18) in einer entsprechenden der vorgegebenen Drehwinkelpositionen befinden, **dadurch gekennzeichnet, dass**
der Gestängemechanismus (20) Folgendes umfasst:
ein Gleitstück (48), das so gelagert ist, dass es sich relativ zu dem Rahmen (16) translatorisch bewegt, und
drei Verbindungsglieder (50), wobei jedes Verbindungsglied (50) an einem entsprechenden der Beine (18) und an dem Gleitstück (48) drehgelagert ist, und
wobei sich die Arretierungsflächen (30) auf dem Gleitstück (48) befinden.

2. Stativsystem (10) nach Anspruch 1, wobei die Befestigungskomponente (32) an dem Rahmen (16) gelagert ist und sich von dem Rahmen (16) nach unten erstreckt, während sich das Stativsystem (10) über einem Arbeitsplatz (14) befindet.

3. Stativsystem (10) nach einem der vorhergehenden Ansprüche, wobei sich die Arretierungsflächen (30) auf dem Gestängemechanismus (20) befinden und die Arretierung (22) so gelagert ist, dass sie sich relativ zu dem Rahmen (16) translatorisch zwischen einer entriegelten Stellung, in der die Arretierung (22) mit keiner der Arretierungsflächen (30) eingreift, und einer verriegelten Stellung, in der die Arretierung (22) mit einer der Arretierungsflächen (30) eingreift, bewegt.

4. Stativsystem (10) nach einem der vorhergehenden Ansprüche, wobei der Rahmen (16) eine längliche Führung (52) umfasst, die das Gleitstück (48) für eine translatorische Bewegung relativ zu dem Rahmen (16) lagert.

5. Stativsystem (10) nach Anspruch 4, wobei die längliche Führung (52) eine zylindrische Stange (52) ist und das Gleitstück (48) eine längliche Bohrung (54) aufweist, die die zylindrische Stange (52) für eine gleitende translatorische Bewegung entlang einer Achse (56) aufnimmt.

6. Stativsystem (10) nach einem der Ansprüche 1, 4 oder 5, wobei die Verbindungsglieder (50) jeweils an einer Stelle an dem Bein (18) drehgelagert sind, die sich über der Stelle befindet, an der das entsprechende Bein (18) an dem Rahmen (16) drehgelagert ist, während sich das Stativsystem (10) über einem Arbeitsplatz (14) befindet.

7. Stativsystem (10) nach Anspruch 1, wobei wenigstens eine der Arretierungsflächen (30) durch eine Bohrung (82, 84) in dem Gleitstück (48) definiert ist.

8. Stativsystem (10) nach Anspruch 1, wobei wenigstens eine der Arretierungsflächen (30) durch eine Endfläche (80, 86) des Gleitstücks (48) definiert ist.

9. Stativsystem (10) nach Anspruch 1, wobei das Gleitstück (48) sich gegenüberliegende Endflächen (80, 86) aufweist, wobei eine der Arretierungsflächen (30) durch eine der Endflächen (80, 86) definiert ist, eine weitere der Arretierungsflächen (30) durch die andere Endfläche (80, 86) definiert ist und wenigstens eine weitere der Arretierungsflächen (30) durch eine Bohrung in dem Gleitstück (48) definiert ist.

10. Stativsystem (10) nach einem der Ansprüche 1 oder 5 bis 9, wobei die Arretierung (22) einen Stift (34) umfasst, der so in dem Rahmen (16) gelagert ist, dass er sich relativ zu dem Rahmen (16) translatorisch zwischen einer entriegelten Stellung, in der die Arretierung (22) mit keiner der Arretierungsflächen (30) eingreift, und einer verriegelten Stellung, in der die Arretierung (22) mit einer der Arretierungsflächen (30) eingreift, bewegt.

11. Stativsystem (10) nach Anspruch 10, wobei der Stift (34) ein zylindrischer Stift (34) ist, der in Richtung zu der verriegelten Stellung federvorgespannt ist.

12. Stativsystem (10) nach Anspruch 10 oder Anspruch 11, wobei das Gleitstück (48) so gelagert ist, dass es sich entlang einer ersten Achse (56) translatorisch bewegt, und der Stift (34) so gelagert ist, dass er sich rechtwinklig zu der ersten Achse (56) translatorisch bewegt.

13. Stativsystem (10) nach einem der Ansprüche 10 bis 12, wobei die Arretierung (22) ferner einen Knopf (44) umfasst, der zu einer Handbetätigung der Arretierung (22) durch einen Benutzer ausgelegt ist.

## Revendications

1. Système de trépied à réglage rapide (10) pour supporter le poids d'un travailleur (12) pendant l'entrée dans et la sortie d'un site de travail (14) en dessous du système de trépied (10), le système de trépied (10) comprenant:
un cadre central (16);
trois pieds de support (18) qui s'étendent à partir du cadre (16), chacun des pieds (18) étant monté de façon pivotante sur le cadre (16);
un mécanisme de liaison (20) qui relie de façon opérationnelle les trois pieds de support (18) afin qu'ils pivotent ensemble par rapport au cadre (16);
un composant d'ancrage (32) supporté par le cadre (16) et les pieds (18) et configuré de manière à ancrer un travailleur pendant l'entrée dans et la sortie d'un site de travail (14) en dessous du système de trépied (10) ;
un arrêt (22) qui s'étend entre le cadre (16) et le mécanisme de liaison (20), l'arrêt (22) étant configuré de manière à verrouiller de façon sélective le mécanisme de liaison (20) contre un déplacement par rapport au cadre (16) à une pluralité de positions d'angle de pivotement prédéterminées distinctes des pieds (18) par rapport au cadre (16), chacune des positions d'angle de pivotement prédéterminées correspondant à une parmi une pluralité de surfaces d'arrêt (30) sur au moins un composant parmi le mécanisme de liaison (20) et le cadre (16), chacune des surfaces d'arrêt (30) étant engagée par l'arrêt (22) avec les pieds (18) à une position correspondante des positions d'angle de pivotement prédéterminées,
**caractérisé en ce que** le mécanisme de liaison (20) comprend:
une glissière (48) montée de manière à se déplacer par rapport au cadre (16); et
trois bielles (50), chaque bielle (50) étant montée de façon pivotante sur un pied correspondant des pieds (18) et sur la glissière (48), et
les surfaces d'arrêt (30) sont situées sur la glissière (48).

2. Système de trépied (10) selon la revendication 1, dans lequel le composant d'ancrage (32) est monté sur le cadre (16) et s'étend vers le bas à partir du cadre (16) avec le système de trépied (10) positionné au-dessus d'un site de travail (14).

3. Système de trépied (10) selon l'une quelconque des revendications précédentes, dans lequel les surfaces d'arrêt (30) sont situées sur le mécanisme de liaison (20) et l'arrêt (22) est monté de manière à se déplacer par rapport au cadre (16) entre une position libre dans laquelle l'arrêt (22) n'est engagé avec aucune des surfaces d'arrêt (30), et une position verrouillée dans laquelle l'arrêt (22) est engagé avec une des surfaces d'arrêt (30).

4. Système de trépied (10) selon l'une quelconque des revendications précédentes, dans lequel le cadre (16) comprend un guide allongé (52) pour monter la glissière (48) en vue d'un déplacement par rapport au cadre (16).

5. Système de trépied (10) selon la revendication 4, dans lequel le guide allongé (52) est une tige cylindrique (52) et la glissière (48) présente un alésage allongé (54) qui reçoit la tige cylindrique (52) pour exécuter un déplacement translationnel coulissant le long d'un axe (56).

6. Système de trépied (10) selon l'une quelconque des revendications 1, 4 ou 5, dans lequel chacune des bielles (50) est montée de façon pivotante sur le pied correspondant (18) en un endroit sur le pied (18) au-dessus de l'endroit où le pied correspondant (18) est monté de façon pivotante sur le cadre (16), avec le système de trépied (10) positionné au-dessus d'un site de travail (14).

7. Système de trépied (10) selon la revendication 1, dans lequel au moins une des surfaces d'arrêt (30) est définie par un trou d'alésage (82, 84) dans la glissière (48).

8. Système de trépied (10) selon la revendication 1, dans lequel au moins une des surfaces d'arrêt (30) est définie par une surface d'extrémité (80, 86) de la glissière (48).

9. Système de trépied (10) selon la revendication 1, dans lequel la glissière (48) présente des surfaces d'extrémité opposées (80, 86), une des surfaces d'arrêt (30) est définie par une des surfaces d'extrémité (80, 86), une autre des surfaces d'arrêt (30) est définie par l'autre surface d'extrémité (80, 86), et au moins une surface d'arrêt supplémentaire des surfaces d'arrêt (30) est définie par un trou d'alésage dans la glissière (48).

10. Système de trépied (10) selon l'une quelconque des revendications 1 ou 5 à 9, dans lequel l'arrêt (22) comprend une broche (34) montée dans le cadre (16) de manière à se déplacer par rapport au cadre (16) entre une position libre dans laquelle l'arrêt (22) n'est engagé avec aucune des surfaces d'arrêt (30) et une position verrouillée dans laquelle l'arrêt (22) est engagé avec une des surfaces d'arrêt (30).

11. Système de trépied (10) selon la revendication 10, dans lequel la broche (34) est une broche cylindrique (34) qui est poussée par ressort en direction de la position verrouillée.

12. Système de trépied (10) selon la revendication 10 ou la revendication 11, dans lequel la glissière (48) est montée de manière à se déplacer le long d'un premier axe (56) et la broche (34) est montée de manière à se déplacer perpendiculairement au premier axe (56).

13. Système de trépied (10) selon l'une quelconque des revendications 10 à 12, dans lequel l'arrêt (22) comprend en outre un bouton (44) configuré pour un actionnement manuel de l'arrêt (22) par un utilisateur.
